Europäisches Patentamt

European Patent Office

Office européen des brevets

Publication number: **0 385 531**
**A1**

# EUROPEAN PATENT APPLICATION

Application number: 90200397.9

Int. Cl.⁵ **D01H 4/48**

Date of filing: **21.02.90**

Priority: **02.03.89 IT 1962289**

Date of publication of application:
**05.09.90 Bulletin 90/36**

Designated Contracting States:
**CH DE FR GB LI**

Applicant: **SAVIO S.p.A.**
**Via Udine 105**
**I-33170 Pordenone(IT)**

Inventor: **Montali, Sergio**
**Via Garibaldi 106**
**I-33080 Roveredo in Piano, Pordenone(IT)**
Inventor: **Ferro, Francesco**
**Via Grado 5**
**I-33170 Pordenone(IT)**
Inventor: **Colli, Luigi**
**Via Azzano X,30**
**I-33170 Pordenone(IT)**

Representative: **De Carli, Erberto et al**
**ING. BARZANO' & ZANARDO MILANO S.p.A.**
**Via Borgonuovo, 10**
**I-20121 Milano(IT)**

Method and device for rejoining yarn in an automatic open-end spinning machine.

A method for rejoining yarn in an automatic open-end spinning machine in which the sliver preparation operations comprise prefeeding it to the carder to equalize its end, then retracting the equalized end out of the range of action of the carder, and returning it to the carder only when its feed to the spinning rotor is to be restarted.

Fig.1A

# METHOD AND DEVICE FOR REJOINING YARN IN AN AUTOMATIC OPEN-END SPINNING MACHINE

This invention relates to a method of yarn joining in open-end spinning machines and more particularly to a method of preparing the fibre sliver which forms the feed before joining or rejoining the yarn top enable spinning to restart.

The open-end spinning process consists essentially of the following stages:
- feeding the fibre sliver to the spinning station by a feed roller:
- unravelling the sliver by a toothed-profile carder which rotates at high speed and separates the sliver into individual fibres:
- pneumatically feeding the individual fibres to the hollow spinning rotor which is provided with an inner groove within which the fibres are deposited in layers by the effect of the centrifugal force generated by the rotor rotating at very high speed of up to 100.000 r.p.m.:
- initially inserting an already formed yarn through a channel located substantially on the axis of rotation of the motor. centrifugal force propelling its free end to the periphery, ie into the groove where it encounters the fibre layer; on drawing out the yarn the fibres become joined to the yarn. acquiring twist in the section between the groove and the exit channel to produce new yarn.

In the known art the spinning machine is provided with yarn-feeling sensors which for each yarn breakage cause the fibre sliver feed roller to stop, as for example in Italian patent No. 791,993 of VUB

In open-end spinning machines, the feed roller is commonly halted by disconnecting the shaft of this roller from its normal mechanical drive by means of disengageable couplings or clutches.

The separating carder continues however to rotate even if yarn production is interrupted.

In the known art the method used for rejoining the yarn and restarting production comprises firstly cleaning the spinning rotor, in which irregularities or dirt build-up have probably occurred.

This cleaning is done either by opening the roller, clamping it and then using suitable tools such as brushes, suction nozzles, spatulas etc., or by keeping the roller closed and using an air blast.

After cleaning, a fibre layer suitable for forming new yarn is rebuilt in the spinning rotor, and the interrupted yarn end is reinserted when the rotor reaches suitable speed, to "fish out" this fibre layer and again produce yarn.

This operation is conducted either manually, in non-automatic spinning machines, or automatically by devices located for example on mobile carriages which patrol the plurality of spinning stations along the machine face in the case of automatic machines, as described in USA patents 3,810,352 and 3,950,926.

A technical problem common to both automatic and non-automatic spinning machines is that the fibre feed sliver which has been halted on yarn breakage, with its feed roller at rest, remains with its end exposed to the action of the separating carder. Generally, the rejoining operation is commenced with variable delay because the rejoining operation requires in the case of non-automatic spinning machines the operator, or in the case of automatic spinning machines the carriage, to arrive in front of the spinning station at which the operation is to be carried out. The operator or carriage can be a variable distance away, or may be engaged in other operations.

During this variable waiting time the end of the feed sliver continues to undergo separation, without advancing, and is depleted of fibres, which are gradually removed by the carder teeth.

When the sliver is reused in that state for restarting the spinning, the fibre layer newly deposited in the rotor groove and used for rejoining purposes gives rise to thinner or fatter weakened portions and thus to an irregular joint, with the result that the produced yarn is of poor quality.

The sliver depletion varies in accordance with the waiting time for commencing the operation, and the layer initially deposited in the rotor groove consequently varies.

According to the known art this variability in the consistency of the fibre sliver re-fed to spinning is overcome by means of a brief prefeed of sliver during the initial stage of the rejoining operation.

This prefeed enables the state of the sliver to be equalized by consuming that portion of sliver which in the meantime has remained exposed to the action of the carder, so restoring the state of the sliver as if the yarn breakage had taken place at the moment the rejoining operation commences.

This prefeed operation to equalize the state of the sliver end which is to be used for rejoining the yarn must necessarily be effected after the arrival of the operator or mobile carriage but before the rotor cleaning operation. The fibres removed from the deteriorated sliver during the waiting time for the operation are deposited in the rotor groove and are removed from there by the subsequent cleaning, whereas if the prefeed were to be effected after the rotor cleaning, this latter would not accomplish its purpose because uncontrolled depositing of other fibres would take place in the cleaned rotor.

Again, if the prefeed were to be effected with the rotor open it would give rise to unacceptable soiling.

The practice of prefeed goes back to the first open-end spinning machines and was already described in the book Open-End Spinning by Rohlena et al., 1974, pages 323 onwards, as a preliminary stage.

According to Italian patent No. 1,045,600 in the name of Stahlecker, this prefeed is effected during the braking of the spinning rotor.

In this patent the sliver feed roller is operated for prefeed purposes by an auxiliary motor positioned on the mobile carriage because during the rejoining operation this feed roller is disconnected from its normal drive, which is used only during spinning.

In other open-end spinning machines, whether automatic or not, the prefeed is effected by the known procedure of reconnecting the sliver feed roller to its normal drive for a short time by re-engaging the couplings or clutches provided for this purpose.

In all cases the prefeed is effected by feeding, and causing the carder to consume, that portion of sliver which, being at rest during the waiting period for the operation, had been exposed to the action of the carder.

The practice of prefeeding the sliver, whether effected as the preliminary stage of the rejoining cycle or during rotor braking, satisfies its purpose of equalizing the state of the sliver re-fed to enable spinning to resume by rejoining, but does not completely solve the problem of its deterioration.

In this respect it must be remembered that after the equalization to produce a constant sliver not influenced by the variable waiting time to the commencement of the rejoining operation, the sliver remains at rest and exposed to the action of the carder, which continues to rotate, for the time period between the sliver prefeed and the restart of feeding for rejoining purposes.

The duration of this time interval is rigorously constant in the case of automatic spinning machines in which the rejoining operation is robotized and generally carried out by a mobile carriage, and substantially constant where the operation is carried out by an operator who has acquired sufficient manual skill.

During this constant time interval the sliver is subjected to deterioration, which is also constant, and this deterioration is a drawback which is not very important from the point of view of the quantity of residual fibres present in the sliver end because this can be remedied by controlling the time interval between the restoration of sliver feed and the "fishing out" of the fibre layer in the rotor cavity by the yarn end.

This drawback cannot however be totally overlooked from the point of view of the quality of the residual fibres present in the sliver end.

It should be noted that the duration of the yarn rejoining cycle interval in current automatic open-end spinning machines is of the order of 15-25 seconds, and the carder has therefore a considerable time available for this deterioration action on the end of the halted sliver.

In this respect it has been found that one of the most important causes of defective joining, even using the prefeed practice, is that the sliver end, which remains subjected to the action of the carder for the entire duration of said interval, is also subjected to qualitative deterioration because the sliver fibres are not only removed but also shortened, so that the new fibre layer deposited in the rotor cavity on restoring the sliver feed and which is used for the actual rejoining is formed from fibres of inferior quality as it also comprises a considerable amount of fibres shortened by the action of the carder rotating on the sliver which is at rest during the waiting time for the rejoining.

The present invention enables the rejoining to be effected with a sliver which is not only equalized but is also substantially sound from the quantitative and qualitative viewpoints, to obtain a joint of greater efficiency.

The method of the present invention consists essentially of effecting the yarn rejoining in accordance with the following main stages.

On yarn breakage, both the sliver feed and winding of the product yarn are halted.

The service carriage is called to the spinning station in which the yarn interruption has occurred, for carrying out the cycle of operations required for rejoining the yarn and restarting spinning.

The cycle of operations effected by the carriage are essentially the following:
- prefeeding the sliver, to consume that part of the sliver which during the period between the halting of spinning and the commencement of the rejoining cycle had remained at rest and exposed to the action of the carder, and equalize its end;
- retracting said end out of the range of action of the carder;
- cleaning the spinning rotor to free its groove of the fibres and impurities which it contains. This rotor cleaning is preferably done using suitable tools with the rotor open and at rest, however it can also be done pneumatically with the rotor closed and/or in movement;
- recovering the interrupted yarn end, preparing it and feeding it into the waiting position for its reinsertion into the spinning rotor in order to "fish out" the new fibre layer and produce new yarn;
- returning the spinning rotor to the required speed for depositing the new fibre layer;
- returning the equalized and now intact sliver end into contact with the separating carder;

- restarting sliver feed by means of the feed roller, to form the new fibre layer in the groove of the spinning rotor;

- effecting the rejoining operation by causing the interrupted sliver end to "fish out" the new fibre layer, and then withdrawing it and restarting its winding.

The retraction is done after the sliver prefeed but before the other stages of the rejoining cycle.

The sliver is returned into contact with the carder preferably only when the spinning rotor is ready to receive a new deposition of fibres for use in the rejoining, and the sliver feed is restarted by means of the feed roller.

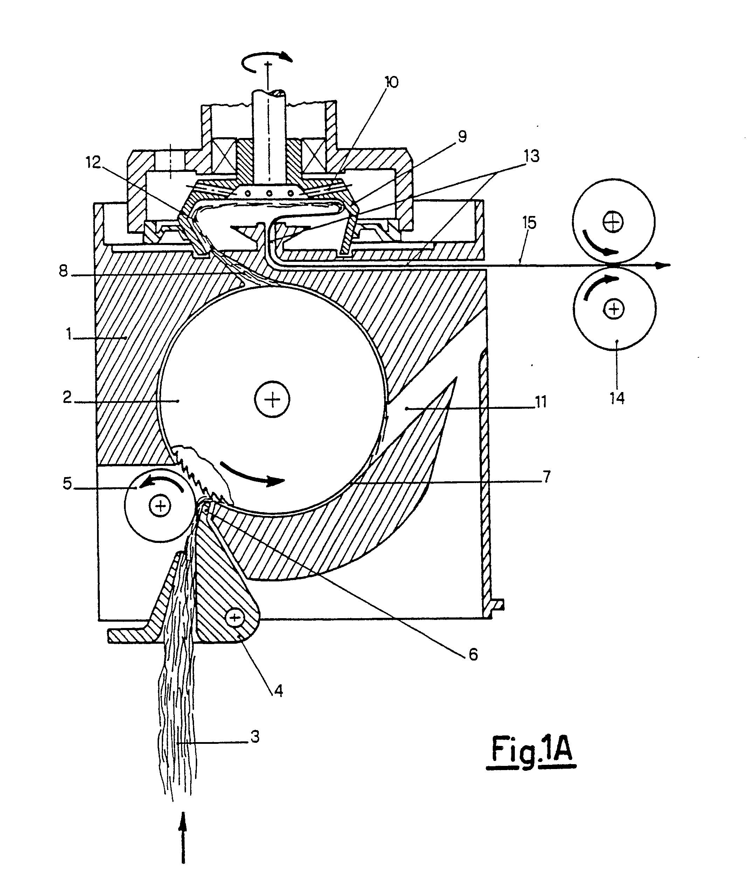

In order to better clarify its characteristics and advantages, a description will now be given of a typical embodiment of the method with reference to the spinning device shown schematically by way of non-limiting example in Figure 1A.

The spinning unit consists of a fixed support 1 in which the rotary carder 2 is positioned, provided along its outer cylindrical surface with saw-toothing to separate the fibres of the feed sliver.

The fibre sliver 3, originating from an underlying chamber not shown on the figure, is fed via a fixed guide 4 by the feed roller 5 which rotates in an anticlockwise direction in order to feed the sliver towards the carder 2.

The feed roller 5 is preferably provided with knurling on its cylindrical surface to increase the dragging effect on the sliver, contact between the sliver 3 and roller 5 being ensured by an approach member 6 the surface of which is kept in proximity to, but not in contact with, the cylindrical surface of the roller 5 by a suitable pneumatic or elastic device not shown on the figure, so that the sliver 3 is guided into engagement with the cylindrical surface of the roller 5.

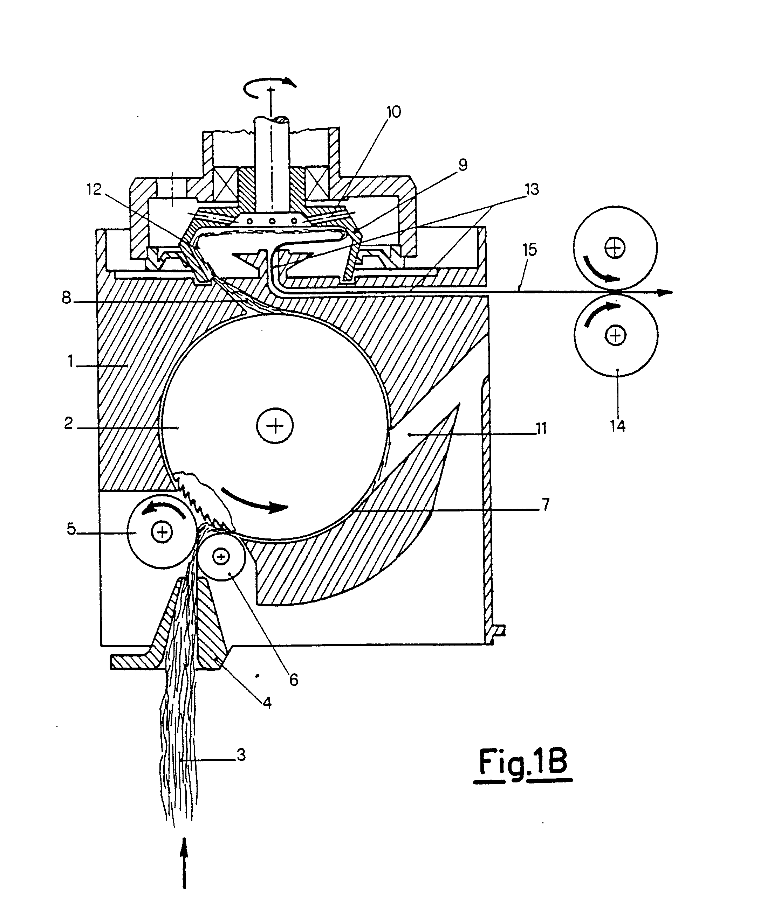

In the practical embodiment the approach member 6 is a shoe with a concave surface facing the roller 5. It can also be formed with one or more backing rollers (not shown) which can be kept idle or rotated coherently with the roller 5, to guide the sliver 3 into adherence with the cylindrical surface of the feed roller 5 along a more or less extensive sector, in accordance with the scheme of Figure 1B In this manner the sliver 3 is fed to the carder 2, which separates it into individual fibres.

The individual fibres travel through the interspace 7 surrounding the carder 2 and are conveyed pneumatically through the channel 8 to the cavity of the rotor 9, which rotates at very high speed.

A vacuum is generated within the cavity of the rotor 9 by the effect of its speed and the perforations 10, or by the action of a separate suction source, and sucks the fibres separated by the carder 2, withdrawing air both from the interspace 7 and through the aperture 11.

Inside the rotor 9 the fibres are subjected to high centrifugal force and are urged towards the periphery where they collect in the annular groove 12 to form a layer of suitable size. An already formed yarn is then inserted through the channel 13 at the commencement of spinning. Its free end is urged by centrifugal force to the periphery of the rotor where it encounters the fibre layer, the yarn then being withdrawn for example by a pair of rollers 14.

The fibres join to the inserted yarn and acquire twist along the path between the annular groove and the axis of the rotor 9, where the exit channel 13 is located.

The produced yarn 15 is extracted and collected in packages or bobbins downstream of the rollers 14, not shown on the figure. When a breakage occurs in the yarn 15, a sensor not shown on the figure causes the feed roller 5 to stop and halts collection of the yarn 15 in known manner.

The yarn-feeling sensor also calls the service carriage to the spinning station in which yarn breakage has occurred, to effect the yarn rejoining operations in accordance with the cycle described heretofore.

The retraction of the sliver and its advancement into the normal feed position can be effected by operating the various sliver movement members, for example by rotating the feed roller 5 firstly in the opposite direction to the normal feed direction, and then in the normal feed direction, through a controlled predetermined angle of rotation.

Alternatively, if the approach member 6 consists of one or more backing rollers as in Figure 1B, the operation can be effected equivalently with the backing rollers, leaving the roller 5 idle. The order of magnitude of the required retraction is indicatively 10 mm.

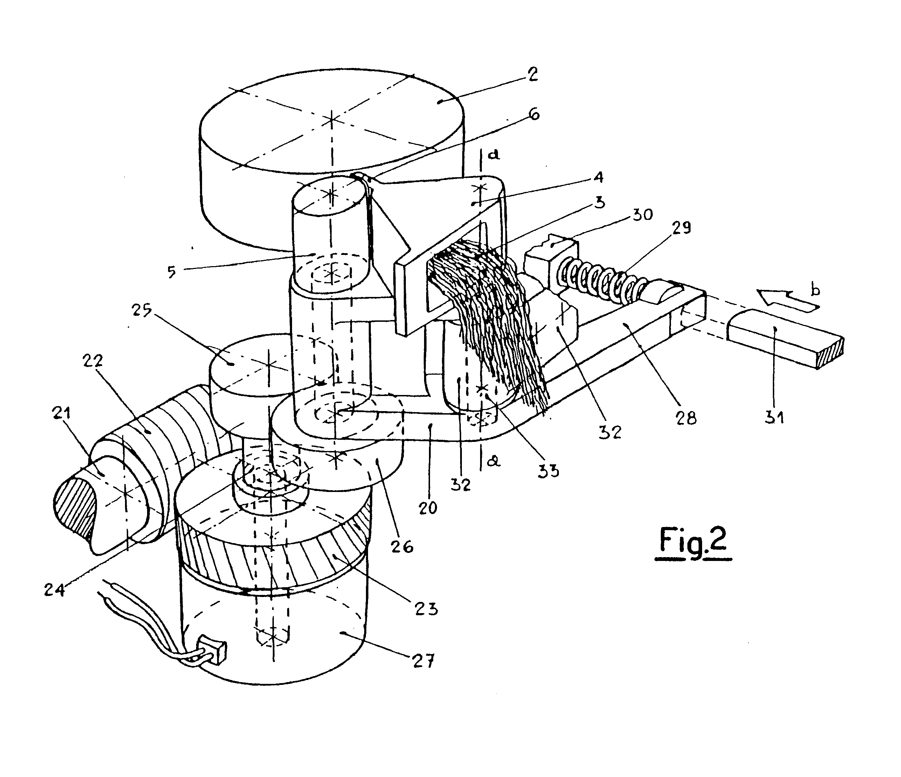

The retraction and advancement of the sliver end can be also effected by moving the feed members relative to the separating carder, a typical embodiment of a device for moving the feed members being shown schematically by way of example in Figure 2, with the feed unit in its normal operating position.

The rotary carder 2 receives the sliver via the funnel-shaped fixed guide 4, which terminates with the shoe-type approach member 6 which brings it into contact with the feed roller 5. The entire sliver feed unit consisting of the funnel 4, shoe 6 and feed roller 5, is mounted on a support 20 which can rotate about the axis aa.

The roller 5 is driven by the drive shaft 21, which distributes the drive to the feed rollers 5 of all the spinning stations along the machine face by worms 22 which engage with helical gears 23 provided in each spinning position.

When the rollers 25 and 26 are in a contacting position as shown in Figure 2, the helical gear 23 transmits motion from the shaft 21 to the roller 26, rigid with the roller 5, by way of the shaft 24 and roller 25 which rotates rigidly with it.

The support 20 is maintained in the approach position by elastically urging said support 20 towards the roller 5, to obtain the necessary friction force for transmitting motion between the rollers 25 and 26. For this purpose, the support 20 is provided with an arm 28 the rear end of which engages a spring 29 which is compressed against a fixed abutment 30.

When a yarn breakage occurs, a yarn-feeling sensor operates to halt the rotation of the feed roller 5 and call the service carriage.

The feed roller 5 is halted by disengaging it from the common drive represented in Figure 2 by the rotary shaft 21.

The engagement and disengagement can be implemented for example by an electromagnetic clutch 27 which engages the roller 25 with the gear 23 or disengages it therefrom, or by a similar clutch between the rollers 5 and 26, the clutch being controlled by the yarn-feeling sensor.

When the roller 5 is disengaged from its drive, the resistance to its rotation provided by the sliver 3 pressed between the roller 5 and shoe 6 causes the roller 5 to halt in a very short time. The arrival of the carriage is followed by commencement of the yarn rejoining operation, for which the feed unit is retracted by moving the support 20.

For this purpose the service carriage is provided with a push rod 31 which can be moved to or fro in the direction b.

The support is moved by advancing the push rod 31 towards the arm 28 so that it engages therewith and rotates the support 20 in an anticlockwise direction to withdraw the roller 5 from the card 2. The spring 29 is further compressed.

The support 20 rotates about the axis aa whereas the hollow support 32 fixed to the support 1 remains at rest, it containing in its interior a pivot 33 which enables the support 20 to rotate. After this withdrawal the push rod 31 remains in position, to thus maintain the feed unit and the sliver end separated from the carder.

The reapproach of the feed unit, to return the sliver end into contact with the carder, is effected by retracting the push rod 31 from the arm 28, the support then returning to its normal spinning position by the action of the spring 29.

The movement of the support 20 can also be effected by translation along a straight withdrawal/approach line instead of by rotation about an axis.

## Claims

1. A method for rejoining yarn in an automatic open-end spinning machine, comprising halting the sliver feed when a yarn breakage occurs, then calling the service carriage for effecting the automatic rejoining cycle, said automatic cycle comprising the following stages:
- prefeeding the sliver for a short time period to equalize its end,
- cleaning the spinning rotor,
- arranging the broken yarn end for rejoining'
- adjusting the spinning rotor speed for deposition of a new fibre layer,
- restarting the fibre sliver feed to the spinning rotor to form a new fibre layer,
- rejoining the broken yarn end to the new fibre layer,
- restarting the winding of the produced yarn, characterised in that during the period between the equalization of the sliver effected by its prefeed and the restarting of the fibre feed to the spinning rotor, the sliver end is retracted and maintained in a position withdrawn from the separating carder by a distance such as to remove said end out of the range of action of the carder.

2. A method for rejoining yarn in an automatic open-end spinning machine as claimed in claim 1, characterised in that the sliver end is retracted by moving the sliver with a movement in the opposite direction to its normal feed movement, by rotating the feed roller 5 in the reverse direction through a controlled, predetermined angle of rotation.

3. A method for rejoining yarn in an automatic open-end spinning machine as claimed in claim 1, characterised in that the sliver end is retracted by displacing the sliver feed unit relative to the separating carder.

4. A method for rejoining yarn in an automatic open-end spinning machine as claimed in claim 3, characterised in that the displacement of the feed unit is effected by rotation.

5. A method for rejoining yarn in an automatic open-end spinning machine as claimed in claim 3, characterised in that the displacement of the feed unit is effected by translation.

6. A sliver feed device in an automatic open-end spinning machine for implementing the method claimed in claim 2, characterised in that the counter-rotation for retracting the sliver is effected by operating backing rollers adjacent to the feed roller 5.

7. A sliver feed device in an automatic open-end spinning machine for implementing the method claimed in claim 3, characterised in that the sliver feed unit consisting essentially of the guide 4, the feed roller 5 and the approach member 6 is mounted on a support 20 which can be moved relative to the separating carder 2.

8. A sliver feed device in an automatic open-end spinning machine for implementing the method claimed in claim 7, characterised in that the movement which withdraws the feed unit from the separating carder is effected by a member positioned on the service carriage and engaging the support 20.

<u>Fig.1A</u>

Fig.1B

Fig.2

# EUROPÄISCHER RECHERCHENBERICHT

Nummer der Anmeldung

EP 90 10 3669

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 661 617 (SERLIN) <br> * Spalte 1, Zeilen 13-31 * <br> --- | 1 | C 03 C 25/02 |
| X | FR-A-2 401 955 (CERTAIN-TEED CORP.) <br> * Patentansprüche; Seite 3, Zeile 9 - Seite 5, Zeile 8 * <br> --- | 1 | |
| X | US-A-4 076 873 (SHEA) <br> * Zusammenfassung * <br> --- | 1 | |
| A | PATENT ABSTRACTS OF JAPAN, Band 8, Nr. 93 (C-220)[1530], 27. April 1984; & JP-A-59 011 377 (NIPPON GOSEI KAGAKU KOGYO K.K.) 20-01-1984 <br> * Zusammenfassung * <br> ----- | 1 | |

RECHERCHIERTE SACHGEBIETE (Int. Cl.5)

C 03 C
C 09 D
D 06 M

Der vorliegende Recherchenbericht wurde für alle Patentansprüche erstellt

| Recherchenort | Abschlußdatum der Recherche | Prüfer |
|---|---|---|
| DEN HAAG | 08-06-1990 | VAN BOMMEL L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes Dokument